# EUROPEAN PATENT SPECIFICATION

(11) **EP 4 098 351 B1**
(45) Date of publication and mention of the grant of the patent: **28.01.2026**
(21) Application number: 22176890.6
(22) Date of filing: 02.06.2022
(51) Int. Cl.: B01D 65/00

(54) **A FILTRATION SYSTEM WITH A LIFTING ARRANGEMENT FOR MEMBRANES**
FILTRATIONSSYSTEM MIT EINER HEBEVORRICHTUNG FÜR MEMBRANEN
SYSTÈME DE FILTRATION COMPRENANT UN AGENCEMENT DE LEVAGE POUR MEMBRANES

(30) Priority: 03.06.2021 EP 21177532
(43) Date of publication of application: 07.12.2022
(73) Proprietor: Tetra Laval Holdings & Finance S.A., 1009 Pully (CH)
(72) Inventor: Andersson, Magnus, 8260 Viby J (DK)
(74) Representative: Tetra Pak Patent Attorneys

(56) References cited:
- EP-A1- 3 650 112
- CN-A- 110 217 703
- DE-A1- 2 727 919
- JP-A- S 577 203
- KR-A- 20110 129 143
- KR-A- 20180 050 992

## Description

### Technical Field

The invention relates to filtration systems for food processing lines. More specifically, it is related to a filtration system comprising a membrane arrangement and to equipment and methods for replacing membranes in the membrane arrangement.

### Background Art

Today, membrane filtration is commonly used for processing and separating components in milk and other liquid food products. To assure that different components of e.g. milk are separated adequately, membranes need to be replaced at frequent intervals. How often depends on a number of factors, such as properties of the food product and quality of the membranes. A factor sometimes overlooked is that the membranes sometimes need to be replaced too soon due to damages caused during handling of the membranes.

To facilitate the handling of the membranes for the operator and thereby reducing the risk of damages, which can reduce the operational lifetime of the membrane, the membranes are often produced in lengths such that these can be handled by an operator. As an effect of this, it is common that membrane housings are made to contain several membranes placed after one another. In this way, when the membranes are to be replaced these are pulled out of the membrane housing one by one, and thereafter new membranes are pushed one by one into the membrane housing.

Even though the membranes are produced in lengths such that these can be efficiently and safely handled by operators, there is still a risk of damaging the membranes when pushing these into the membrane housings.

Related prior art is described in patent documents JPS577203A, KR20180050992A, KR20110129143A, CN110217703A, EP3650112A1, and DE2727919A1.

### Summary

It is an object of the invention to at least partly overcome one or more of the above-identified limitations of the prior art. In particular, it is an object to provide a filtration system where the risk of damaging the membranes when pushing these into the membranes housings is mitigated.

According to a first aspect a filtration system is provided according to claim 1.

An advantage with having the filtration system provided with the lifting arrangement is that membranes may be handled and inserted securely into the membrane housings, thereby reducing the risk of damaging the membranes.

The membrane housings may be arranged in horizontal rows and vertical columns. This configuration provides for convenient and efficient operation of the lifting arrangement.

The membranes may be spiral wound membranes that are arranged in groups in the membrane housings, where the membranes in each group are positioned after one another in the first direction. An advantage of having several membranes in each membrane housing is that the membranes may be produced at a length easy to handle for the operator when using the lifting arrangement. This provides for that the risk of damaging the membranes can be further reduced.

The beam may be provided with a groove to which the gripper unit is connected, for allowing the gripper unit to slide along the beam in the direction along the common plane. Having the beam provided with the groove provides for that the membrane can be reliably handled and moved in said direction.

The gripper unit is attached to the beam via a hoist unit, the hoist unit comprises a motor arranged to vertically move the gripper unit together with a membrane held by the gripper unit.

The gripper unit may comprise a pipe tong for gripping a membrane. Having the gripper unit embodied as a pipe tong provides for a reliable gripping mechanism that can easily be controlled for safe handling of the membranes.

The gripper unit may comprise a first arm, a second arm, a third arm and a fourth arm, wherein the first arm may be connected to the second arm via a first rotational point, the third arm may be connected to the first arm via a second rotational point, the fourth arm may be connected to the second arm via a third rotational point, the third arm may be connected to the fourth arm via the fourth rotational point. A first membrane holder is attached to the fourth arm, and a second membrane holder is attached to the third arm, for allowing the first and second membrane holder to clamp the membrane when the second arm is pulled upwards.

The gripper unit may comprise a locking device and a locking element, wherein the locking element may be rotationally connected to the second arm via a fifth rotational point, said locking device may further comprise a guiding element, fixedly attached and provided with a slanted top surface and a bottom surface recess, and a tilt element, rotationally attached via a tilt rotational point and provided with a slanted top surface and a bottom surface. The locking element further comprises a locking pin provided in a peripheral end of the locking element, such that: when the second arm is lowered the locking pin is introduced into the locking device and guided downwards via the slanted top surface of the tilt element and the slanted top surface of the guiding element; thereafter, when the second arm is lifted, the locking pin is caught in the bottom surface recess of the guiding element, thereby providing for that the first and second membrane holder are held apart; and thereafter, when the second arm is lowered and lifted, the locking pin is released from the bottom surface recess and pushed through between the guiding element and the tilt element by pushing the tilt element from a closed position to an open position via the bottom surface of the tilt element and out from the locking device.

An advantage with having the locking device is that the gripper unit may be lowered down onto the membrane, and once being in contact with the membrane the locking pin can be released from the bottom surface recess such that the membrane is gripped, or clamped, between the first and second membrane holders. Put differently, the membrane may be gripped without any specific locking action being required by the operator.

The support frame may be fixedly attached relative to the membrane arrangement. The support frame may be fixedly attached to the membrane housings. The support frame may be attached to the membrane housings via a first and a second pipe clamp. An advantage with having the support frame attached in this way is that the lifting arrangement can easily be mounted to an existing filtration system without introducing any new parts being in contact with the food product.

The filtration system may further comprise a support device arranged to be connected to one of the membrane housings at the opening of the membrane housing, and configured to support membranes that are pushed into or pulled out from the membrane housing. An advantage with having the support device is that the membrane may pulled out from the membrane housing into the support device and thereafter, while being held in the support device, the membrane may be gripped by the gripper unit. Conversely, when inserting a new membrane, the membrane may be placed into the support device by the gripper unit, and after being released by the gripper unit, be pushed into the membrane housing. Thus, the combination of the lifting arrangement and the support device provides for that the membranes can be handled even more securely such that the risk of damaging these can be reduced.

A lifting arrangement is also described, which is arranged to be fixedly attached relative to a membrane arrangement such that a filtration system according to the first aspect is formed, said lifting arrangement comprising a support frame having a beam that extends along the common plane and is provided vertically above the common area, and a gripper unit slidably attached to the beam and arranged to grip the membranes and to transport the membranes in a direction B along the common plane.

An advantage with the lifting arrangement is that the risk of damaging the membranes can be reduced, for example when retrofitting existing membrane arrangements with the lifting arrangement.

According to a second aspect it is provided a method for replacing membranes in a filtration system according to the first aspect, said method comprising
a) attaching the support device to an opening of one of the membrane housings of the filtration system,
b) pulling a membrane out from the membrane housing and into the support device,
c) gripping and lifting the membrane with the gripper unit,
d) moving the gripper unit with the membrane in the direction B along the common plane,
e) lowering and releasing the membrane in a drop off area,
f) repeating steps b) to e) until the membrane housing is empty,
g) gripping and lifting, from a pick-up area, a new membrane with the gripper unit,
h) sliding the gripping unit with the new membrane in the direction B along the common plane,
i) lowering and releasing the new membrane in the support device,
j) pushing the new membrane into the membrane housing,
k) repeating steps g) to k) until the membrane housing is full with new membranes,
l) removing the support device from the opening of the membrane housing, and
m) repeating steps a) to I) for a number of membrane housings of the filtration system.

Also for this second aspect, the advantage is that the risk of damaging the membranes can be reduced.

The features and advantages discussed in relation to the first aspect also apply to the second aspect even though not explicitly mentioned in relation to this aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of a filtration system.
Fig. 2 is a detailed perspective of a lifting arrangement of the filtration system.
Fig. 3A generally illustrates the filtration system from above when a membrane is pulled out from a membrane housing.
Fig. 3B generally illustrates the filtration system from above when the membrane is moved, by using a carrier unit, from a membrane housing towards a drop off area.
Fig. 4A illustrates the carrier unit in further detail.
Fig. 4B illustrates a locking device of the carrier unit.
Fig. 5 is a flow chart illustrating a method for replacing a membrane.

### Detailed Description

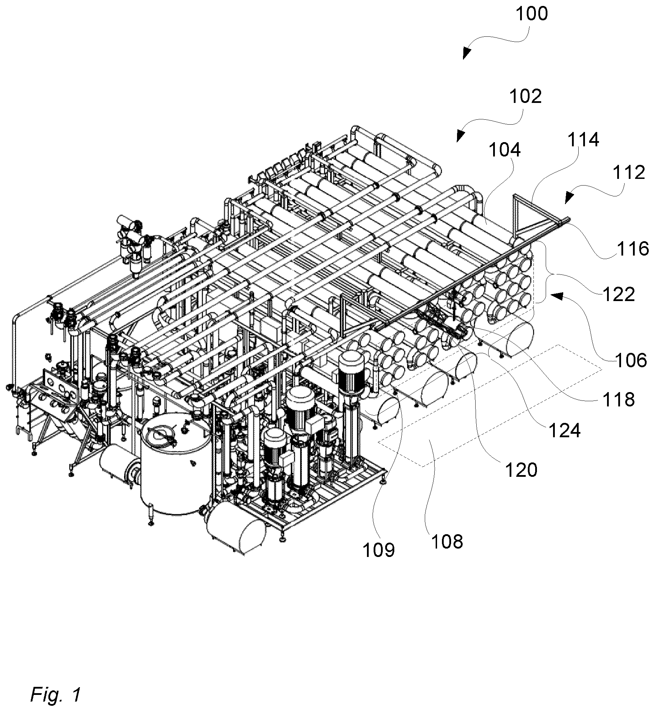

With reference to Fig. 1, a filtration system 100 is illustrated by way of example. The filtration system 100 can form part of a food processing line for milk or other liquid food products. The filtration system 100 may, for example, be used for separating different components of milk such that lactose free milk can be produced, but also for removing bacteria and spores without the need to heat treat the food products. To achieve this, different membranes may be used, e.g. spiral wound membranes.

The filtration system 100 can comprise a membrane arrangement 102 in turn comprising a number of membrane housings 104. As illustrated, to reduce footprint of the filtration system 100, the membrane housings 104 may be provided in horizontal layers placed on top of each other. The membrane housings 104 can be provided with openings 106 in one end to provide for that membranes inside the housing 104 can be replaced. The openings 106 may all face a common area 108 as illustrated such that an operator can replace membranes from one and the same side. Even though not illustrated, it is also an option to have some openings facing in an opposite direction such that there are two common areas in which the operator can replace the membranes. Further, it is also possible two have openings in both ends of the membrane housings 104.

Some or even all of the openings 106 may be arranged in a common plane 109. Since the membrane housings 104 in the illustrated example are provided in a number of horizontal layers arranged on top of each other, the openings 106 are arranged in this common plane 109 in rows 124 and columns 122.

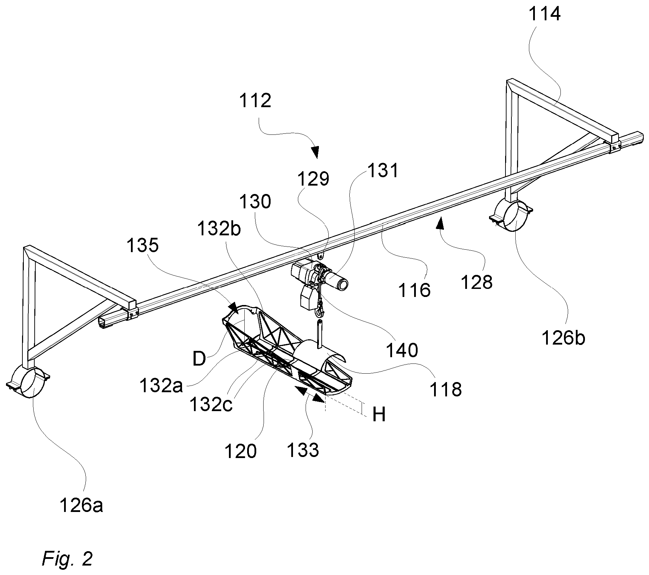

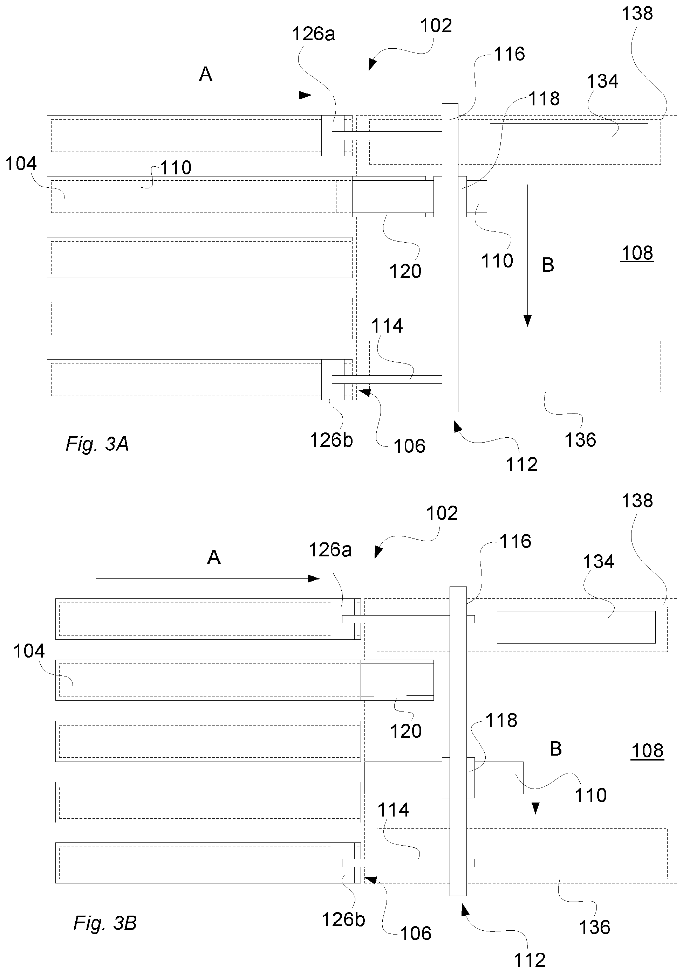

To facilitate handling of the membranes 110 (which is further illustrated in fig. 2, 3A and 3B), a lifting arrangement 112 can be used. The lifting arrangement 112 may comprise a support frame 114 that in one end can be attached to the membrane arrangement 102 and in the other end support a beam 116. As illustrated, the beam 116 may be arranged such that it is parallel, or at least substantially parallel, with the common plane 109. This is advantageous in that a gripper unit 118 that is attached to the beam 116 can be moved along the beam 116 and thereby reach different columns 122 of the openings 106 of the membrane housings 104.

Once the gripper unit 118 is aligned with the opening 106 from which the membrane 110 is to be pulled out, a support device 120 (see fig. 2) may be used for holding the membrane 110 after this has been pulled out from the membrane housing 104, but before being gripped by the gripper unit 118. The support device 120 may be designed in different ways. The support device 120 can be made with an opening in one end such that this may be hooked onto one of the membrane housings 104.

Fig. 2 illustrates the lifting arrangement 112 and the support device 120 in further detail. As illustrated, the lifting arrangement 112 may be attached to the membrane arrangement 102 by using first and second pipe clamps 126a, 126b. These clamps may be arranged around the membrane housings 104. An advantage with this is that the lifting arrangement 112 can be attached to an existing membrane arrangement 102 with no or few modifications needed.

The gripper unit 118, which is generally illustrated in fig. 2, may be moved along the beam 116 by having a groove 128 in a bottom section of the beam 116. By using this groove 128 in combination with a sliding member 129 held in the groove 128, the gripper unit 118 may be slided along the beam 116 by an operator.

The gripper unit 118 is attached to the beam 116 via a hoist unit 130 that can lift the gripper unit 118 vertically. The hoist unit 130 is provided with a motor 131 such that a membrane 110 can be lifted and lowered reliably. Thus, the hoist unit 130 may in combination with the beam 116 provide for that a membrane 110 can be securely transported and aligned with the opening 106 before this is pushed into the membrane housing 104. Using this approach compared to a manual approach, in which the membrane 110 is lifted, aligned and pushed by one and the same operator, reduces the risk of damages to the membrane 110. Reduced damage of the membrane provides for increased efficiency of the membrane system.

The hoist unit 130 may be designed in different ways.

The gripper unit 118 is fully suspended by the hoist unit 130. The hoist unit 130 is arranged vertically above the gripper unit 118. This may mean that the gripper unit 118 is not supported by any structure that is located vertically below the gripper unit 118. In this way space may be freed up below the gripper unit 118 when used for lifting membranes. The gripper unit 118 may be connected to the hoist unit 130 via a flexible connection element 140 such as a chain, a wire, a rope or similar.

To provide for that the membrane 110, while held in the support device 120, can be gripped securely by the gripper unit 118, the support device 120 may have a first and a second guiding wall 132a, 132b. An advantage with these is that the membrane 110 can be guided into the opening 106 of the membrane housing 104 in a way such that the risk of damaging the membrane 110, due to non-alignment, can be reduced. A further advantage is that the first and second guiding walls 132a, 132b can hold the membrane 110 after this has been pulled out via the opening 106 of the membrane housing 104 while the membrane is gripped by the gripper unit 118. Put differently, by using the support device 120 in combination with the gripper unit 118, the operator may first pull out the membrane 110 from the membrane housing 104 into the support device 120. Thereafter, the membrane 110 may be gripped by the gripper unit 118.

As illustrated, the first and second guiding walls 132a, 132b, which extend upwardly from ribs that form a base 132c of the support device 120, may be arranged such that the membrane 110 held in the support device 120 can be gripped by the gripper unit 118 from above. For instance, a height H of the first and second guiding walls 132a, 132b of the support device 120 in a gripping section 133 may be less than half a diameter D of an opening 135 of the support device 120 through which a membrane may be pushed. Further, as illustrated, the height H of the first and second guiding walls 132a, 132b of the support device 120 may be declining towards an outer end of the support device 120.

Fig. 3A and 3B illustrate an example of how the membrane 110 can be pulled out from the membrane arrangement 102. As illustrated in fig. 3A, the membrane 110 can be pulled out from the membrane housing 104 into the support device 120. The membrane housings 104 extends in a first direction A and the beam 116 extends in a second direction B perpendicular, or at least substantially perpendicular, to the first direction A. The first direction A is a horizontal direction.

In fig. 3A, it is illustrated how the membrane 110 is pulled out from the membrane housing 104 via the opening 106 into the support device 120. At this stage, the gripper unit 118 may be held above and at a distance from the membrane 110 held in the support device 120. After the membrane 110 has been completely pulled out from the membrane housing 104, the gripper unit 118 may be lowered and the membrane 110 may be gripped by the gripper unit 118.

In fig. 3B, it is illustrated how the membrane 110 can be transported in the second direction B by being slided together with the gripper unit 118 along the beam 116. When replacing the membrane 110, the membrane 110 may be dropped off by the gripper unit 118 in a drop off area 136. After the membrane 110 has been dropped off, the gripper unit 118 may be transported to a pick-up area 138 in which a new membrane 134 may be picked up. The new membrane 134 may be picked up by lowering down the gripper unit 118 such that the new membrane 134 can be gripped. After the new membrane 134 is gripped, the gripper unit 118 and the membrane 110 can be transported by being slided along the beam 116 to the support device 120. Thereafter, after the gripper unit 118 is placed above the support device 120, the gripper unit 118 can be lowered such that the new membrane 134 is placed in the support device 120. After being positioned in the support device 120, the new membrane 134 can be released from the gripper unit 118. Finally, after being placed in the support device 120, the new membrane 134 is aligned in the first direction A by the first and second guiding walls 132a, 132b and it can thus be pushed into the membrane housing 104 in a safe and secure manner.

Even though the use of the support device 120 comes with a number of advantages, the membrane 110 can be replaced without using the support device 120. For instance, the membrane 110 may be pulled out halfway from the membrane housing 104 and while the membrane 110 is held in place by the membrane housing 104, possibly in combination with assistance from an operator supporting the membrane 110, the membrane 110 can be gripped by the gripper unit 118. A similar but reverse process may be used for introducing the new membrane 134 into the membrane housing 104. For instance, after the new membrane 134 has been aligned with the opening 106 of the membrane housing 104, a section of the new membrane 134 can be pushed into the membrane housing 104 such that the new membrane 134 is held in place by the membrane housing 104, and thereafter the gripper unit 118 can be released from new membrane 134. Once released, the new membrane 134 can be fully pushed into the membrane housing 104.

The gripper unit 118 may be linked to the hoist unit 130 via a chain 140 or similar. When lifting or lowering the membrane 110, the hoist unit 130 may be held still and the gripper unit 118 may be lifted or lowered together with the membrane 110. Lowering or lifting the membrane 110 may be achieved by reducing or increasing a length of the chain 140 linking the two parts 118, 130. Having the chain 140 also provides for that the membrane 110 as well as the new membrane 134 can be moved in the first direction A such that e.g. the membrane 110 can be pushed into the membrane housing 104 before releasing the gripper unit 118.

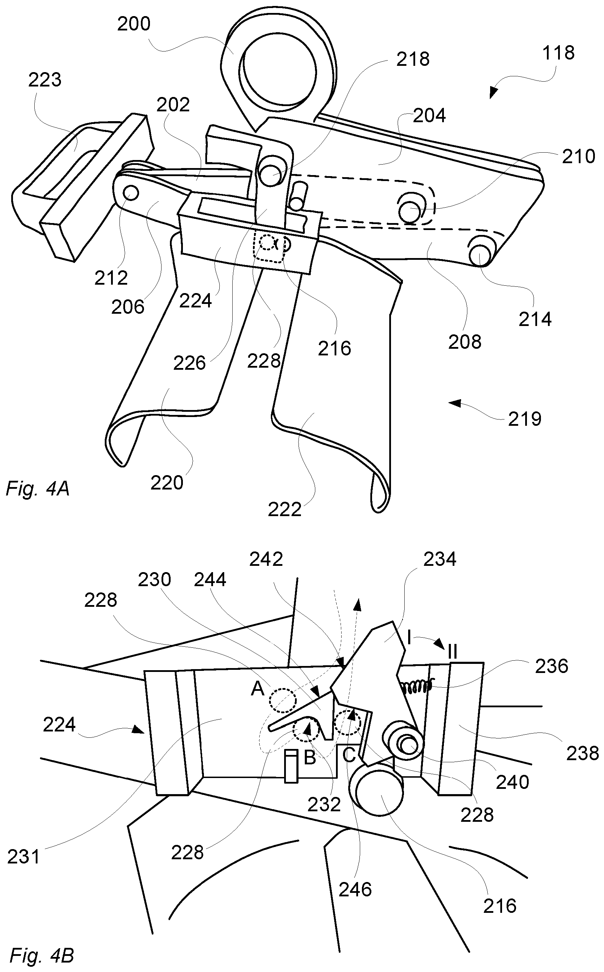

Fig. 4A illustrates the gripper unit 118 by way of example. The example illustrated is a so-called pipe tong 219. In fig. 4A the gripper unit 118 is illustrated in a release mode.

The gripper unit 118 can comprise an attachment ring 200. When lifting the gripper unit 118 in the attachment ring 200, a first arm 202 and a second arm 204 rotationally connected to each other is lifted such that these extend substantially vertical instead of substantially horizontally. Since the first arm 202 is rotationally connected to a third arm 206, placed below the first arm 202, and the second arm 204 is rotationally connected to a fourth arm 208, placed below the second arm 204, this will have the effect that in turn also the third arm 206 and the fourth arm 208 are changed from extending substantially horizontally to substantially vertically. As illustrated, the first arm 202 can be connected to the second arm 204 in a first rotational point 210, the first arm 202 can be connected to the third arm 206 in a second rotational point 212, the second arm 204 can be connected to the fourth arm 208 in a third rotational point 214, and the third and fourth arm 206, 208 can be connected to each other in a fourth rotational point 216. In the example illustrated, a fifth rotational point 218 is provided above the fourth rotational point 216. Via this fifth rotational point 218, the attachment ring 200 is connected to the second arm 204.

A first membrane holder 220 can be attached to the fourth arm 208 below the fourth rotational point 216, and a second membrane holder 222 can be attached to the third arm 206 below the fourth rotational point 216. In this way, when lifting the gripper unit 118 in the attachment ring 200, the first and second membrane holders 220, 222 will move towards one another and thereby providing for that the membrane 110 can be securely held between the two. When holding the membrane between the first and second membrane holders 220, 222, the gripper unit 118 is referred to be in a grip mode.

When holding the membrane 110 between the first and second membrane holders 220, 222, the hoist unit 130 and the gripper unit 118 can be slided along the beam 116 by the operator. To reduce the risk that the operator is damaging the membrane 110 while sliding along the beam 116, a handle 223 may be provided on the gripper unit 118.

To facilitate releasing and gripping of the membrane 110, a locking device 224 can be provided. The locking device 224, which is further illustrated in fig. 4B, may interact with a locking element 226 provided with a protrusion 228 in a peripheral end. The protrusion 228 may have the form of a pin, and may be referred to as a locking pin 228. In the example illustrated, the locking element 226 can be connected to the second arm 204 via the fifth rotational point 218. As illustrated, the locking element 226 may be L-shaped. An effect of this L-shape is that a momentum will be formed that will provide for that the protrusion 228 is pushed in accordance with the momentum formed by the L-shape. In this particular example, the protrusion 228 is pushed to the right.

Fig. 4B illustrates the locking device 224 in further detail. For illustrative purposes, a front side of the locking device 224 has been removed. The locking device 224 can comprise a guiding element 230, which may be fixedly attached to a rear side 231 of the locking device 224. The guiding element 230 may comprise a bottom surface recess 232 arranged to hold the protrusion 228.

A tilt element 234 can also be provided. As the name suggests, the tilt element 234 can be tilted between a closed position I, as illustrated, and an open position II. To provide for that the tilt element 234 is in the closed position I when not forced into the open position II, a spring 236 attached to a side wall 238 can be provided. In a lower end of the tilt element 234, a tilt rotational point 240 may be provided.

With the locking device 224 arranged in this way, the protrusion 228 of the locking element 226 when lowered into the locking device 224 can be guided via a slanted top surface 242 of the tilt element 234 and a slanted top surface 244 of the guiding element 230 into a position A. The L-shape of the locking element 226 can provide for that the protrusion 228 is pushed towards the slanted top surfaces 242, 244.

After being guided along the slanted top surfaces 242, 244, the protrusion 228 is introduced into the bottom surface recess 232 of the guiding element 230, herein denoted as position B. In this position, the locking element 226 provides for that the gripper unit 118 is in the release mode, i.e. the first and second membrane members 220, 222 are held apart as illustrated in fig. 4A.

When having the protrusion 228 placed in the bottom surface recess 232, i.e. position B, and lowering the gripper unit 118 onto the membrane 110, the protrusion 228 will be released from the bottom surface recess 232, move down and thereafter into a position between the guiding element 230 and the tilt element 234, herein denoted position C. When lifting the gripper unit 118, the tilt element 234 can be tilted from the closed position I to the open position II when the protrusion 228 engages the bottom surface 246 of the tilt element 234, such that the protrusion 228 is let through between the guiding element 230 and the tilt element 234. As an effect of that the protrusion 228 is let through, the gripper unit 118 is no longer locked in the release mode, but can enter the grip mode and thereby grip the membrane 110.

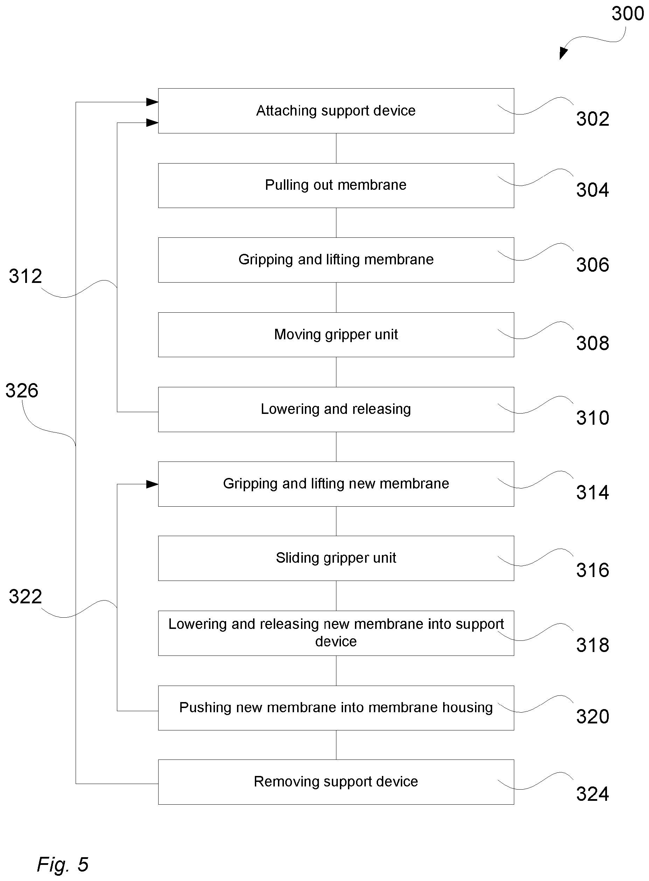

Fig. 5 is a flowchart illustrating a method 300 for replacing membranes 110 in the filtration system 100 by way of example. The method can comprise
a) attaching 302 the support device 120 to the opening 106 of one of the membrane housings 104 of the filtration system 100,
b) pulling 304 the membrane 110 out from the membrane housing 104 and into the support device 120,
c) gripping and lifting 306 the membrane 106 with the gripper unit 118,
d) moving 308 the gripper unit 118 with the membrane 106 in the direction B along the common plane 109,
e) lowering and releasing 310 the membrane 106 in the drop off area 136,
f) repeating 312 steps 302, 304, 306, 308 and 310 (b) to e)) until the membrane housing 104 is empty,
g) gripping and lifting 314, from the pick-up area 138, the new membrane 134 with the gripper unit 118,
h) sliding 316 the gripping unit 118 with the new membrane 134 in the direction B along the common plane 109,
i) lowering and releasing 318 the new membrane 134 in the support device 120,
j) pushing 320 the new membrane into the membrane housing 104,
k) repeating 322 steps 314, 316, 318 and 320 (g) to k)) until the membrane housing 104 is full with new membranes 134,
l) removing 324 the support device 120 from the opening 106 of the membrane housing 104, and
m) repeating 326 all steps (a) to I)) for a number of membrane housings 104 of the filtration system 100.

Even though described in a specific order, it should be understood that other orders may be used as well. Further, even though not explicitly described in relation to the method, the different features and advantages described in relation to the filtration system above may also be applied for the method.

From the description above follows that, although various embodiments of the invention have been described and shown, the invention is not restricted thereto, but may also be embodied in other ways within the scope of the subject-matter defined in the following claims.

## Claims

1. A filtration system (100) comprising
a membrane arrangement (102) comprising
membrane housings (104) extending in a first direction (A) and having openings (106) that are located in a common plane (109) and face a common area (108), and
membranes (110) arranged inside the membrane housings (104) and configured to be replaced via the openings (106), and
a lifting arrangement (112) comprising
a support frame (114) having a beam (116) that extends along the common plane (109) and is provided vertically above the common area (108), and
a gripper unit (118) slidably attached to the beam (116) and arranged to grip the membranes (110) and transport the membranes (106) in a direction (B) along the common plane (109),
the membrane housings (104) extend in a first direction (A) and the beam (116) extends in a second direction (B) perpendicular, or at least substantially perpendicular, to the first direction (A), wherein the first direction (A) is a horizontal direction, **characterized in that**
the gripper unit (118) is attached to the beam (116) via a hoist unit (130), the hoist unit (130) comprising a motor (131) arranged to vertically move the gripper unit (118) together with a membrane (110) held by the gripper unit (118), and
the gripper unit (118) is fully suspended by the hoist unit (130), and the hoist unit (130) being arranged vertically above the gripper unit (118).

2. The filtration system (100) according to claim 1, wherein the membrane housings (104) are arranged in horizontal rows (124) and vertical columns (122).

3. The filtration system (100) according to any one of the preceding claims, wherein the membranes (110) are spiral wound membranes that are arranged in groups in the membrane housings (104), where the membranes (110) in each group are positioned after one another in the first direction (A).

4. The filtration system (100) according to any one of the preceding claims, wherein the beam (116) is provided with a groove (128) to which the gripper unit (118) is connected, for allowing the gripper unit to slide along the beam (116) in the direction (B) along the common plane (109).

5. The filtration system (100) according to any one of the preceding claims, wherein the gripper unit (118) comprises a pipe tong 219 for gripping a membrane (110).

6. The filtration system (100) according to any one of the preceding claims, wherein the gripper unit (118) comprises
a first arm (202), a second arm (204), a third arm (206) and a fourth arm (208), wherein the first arm (202) is connected to the second arm (204) via a first rotational point (210), the third arm (206) is connected to the first arm (202) via a second rotational point (212), the fourth arm (208) is connected to the second arm (204) via a third rotational point (214), and the third arm (206) is connected to the fourth arm (208) via the fourth rotational point (216),
a first membrane holder (220) attached to the fourth arm (208), and a second membrane holder (222) attached to the third arm (206), for allowing the first and second membrane holder (220, 222) to clamp the membrane (110) when the second arm (204) is pulled upwards.

7. The filtration system (100) according to claim 6, wherein the gripper unit (118) comprises a locking device (224) and a locking element (226), wherein the locking element (226) is rotationally connected to the second arm (206) via a fifth rotational point (218), said locking device (224) comprising
a guiding element (230) provided with a slanted top surface (242) and a bottom surface recess (232),
a tilt element (234) rotationally attached via a tilt rotational point (240) and provided with a slanted top surface (244) and a bottom surface (246),
wherein the said locking element (226) further comprising
a locking pin (228) provided in a peripheral end of the locking element (226), such that
when the second arm (206) is lowered the locking pin (228) is introduced into the locking device (224) and guided downwards via the slanted top surface (242) of the tilt element (234) and the slanted top surface (244) of the guiding element (230),
thereafter, when the second arm (206) is lifted, the locking pin (228) is caught in the bottom surface recess (232) of the guiding element (230), thereby providing for that the first and second membrane holder (220, 222) are held apart,
thereafter, when the second arm (206) is lowered and lifted, the locking pin (228) is released from the bottom surface recess (232) and pushed through between the guiding element (230) and the tilt element (234) by pushing the tilt element (234) from a closed position (I) to an open position (II) via the bottom surface (246) of the tilt element (234) and out from the locking device (224).

8. The filtration system (100) according to any one of the preceding claims, wherein the support frame (114) is fixedly attached relative to the membrane arrangement (102).

9. The filtration system (100) according to any one of the preceding claims, wherein the support frame (114) is fixedly attached to the membrane housings (104).

10. The filtration system (100) according to claim 9, wherein the support frame (114) is attached to the membrane housings (104) via a first and a second pipe clamp (126a, 126b).

11. The filtration system (100) according to any one of the preceding claims, comprising a support device (120) arranged to be connected to one of the membrane housings (104) at the opening (106) of the membrane housing (104), and configured to support membranes (110) that are pushed into or pulled out from the membrane housing (106).

12. A method (300) for replacing membranes (110) in a filtration system (100) according to claim 11, the membrane housings (104) in the filtration system (100) extending in a horizontal direction (A), said method comprising
a) attaching (302) the support device (120) to an opening (106) of one of the membrane housings (104) of the filtration system (100),
b) pulling (304), in the horizontal direction (A), a membrane (110) out from the membrane housing (104) and into the support device (120),
c) gripping and lifting (306) the membrane (106) with the gripper unit (118),
d) moving (308) the gripper unit (118) with the membrane (106) in the direction (B) along the common plane (109),
e) lowering and releasing (310) the membrane (106) in a drop off area (136),
f) repeating (312) steps b) to e) until the membrane housing (104) is empty,
g) gripping and lifting (314), from a pick-up area (138), a new membrane (134) with the gripper unit (118),
h) sliding (316) the gripping unit (118) with the new membrane (134) in the direction (B) along the common plane (109),
i) lowering and releasing (318) the new membrane (134) in the support device (120),
j) pushing (320), in the horizontal direction (A), the new membrane into the membrane housing (104),
k) repeating (322) steps g) to j) until the membrane housing (104) is full with new membranes (134),
l) removing (324) the support device (120) from the opening (106) of the membrane housing (104), and
m) repeating (326) steps a) to I) for a number of membrane housings (104) of the filtration system (100).

## Patentansprüche

1. Filtrationssystem (100), umfassend
eine Membrananordnung (102), umfassend
Membrangehäuse (104), die sich in einer ersten Richtung (A) erstrecken und Öffnungen (106) aufweisen, die in einer gemeinsamen Ebene (109) angeordnet sind und einem gemeinsamen Bereich (108) zugewandt sind, und
Membranen (110), die innerhalb der Membrangehäuse (104) angeordnet und dazu ausgelegt sind, über die Öffnungen (106) ausgetauscht zu werden, und
eine Hebevorrichtung (112), umfassend
einen Tragrahmen (114) mit einem Träger (116), der sich entlang der gemeinsamen Ebene (109) erstreckt und vertikal oberhalb des gemeinsamen Bereichs (108) vorgesehen ist, und
eine Greifeinheit (118), die verschiebbar an dem Träger (116) angebracht und dazu angeordnet ist, die Membranen (110) zu greifen und die Membranen (106) in einer Richtung (B) entlang der gemeinsamen Ebene (109) zu transportieren,
wobei sich die Membrangehäuse (104) in einer ersten Richtung (A) erstrecken und sich der Träger (116) in einer zweiten Richtung (B) senkrecht oder zumindest im Wesentlichen senkrecht zu der ersten Richtung (A) erstreckt, wobei die erste Richtung (A) eine horizontale Richtung ist, **dadurch gekennzeichnet, dass**
die Greifeinheit (118) über eine Hebeeinheit (130) an dem Träger (116) befestigt ist, wobei die Hebeeinheit (130) einen Motor (131) umfasst, der dazu angeordnet ist, die Greifeinheit (118) zusammen mit einer von der Greifeinheit (118) gehaltenen Membran (110) vertikal zu bewegen, und
die Greifeinheit (118) von der Hebeeinheit (130) vollständig aufgehängt ist und die Hebeeinheit (130) vertikal über der Greifeinheit (118) angeordnet ist.

2. Filtrationssystem (100) nach Anspruch 1, wobei die Membrangehäuse (104) in horizontalen Reihen (124) und vertikalen Spalten (122) angeordnet sind.

3. Filtrationssystem (100) nach einem der vorhergehenden Ansprüche, wobei die Membranen (110) spiralförmig gewickelte Membranen sind, die in Gruppen in den Membrangehäusen (104) angeordnet sind, wobei die Membranen (110) in jeder Gruppe in der ersten Richtung (A) hintereinander positioniert sind.

4. Filtrationssystem (100) nach einem der vorhergehenden Ansprüche, wobei der Träger (116) mit einer Nut (128) versehen ist, mit der die Greifeinheit (118) verbunden ist, um es der Greifeinheit zu ermöglichen, sich in der Richtung (B) entlang der gemeinsamen Ebene (109) entlang des Trägers (116) zu verschieben.

5. Filtrationssystem (100) nach einem der vorhergehenden Ansprüche, wobei die Greifeinheit (118) eine Rohrzange 219 zum Greifen einer Membran (110) umfasst.

6. Filtrationssystem (100) nach einem der vorhergehenden Ansprüche, wobei die Greifeinheit (118) Folgendes umfasst
einen ersten Arm (202), einen zweiten Arm (204), einen dritten Arm (206) und einen vierten Arm (208), wobei der erste Arm (202) über einen ersten Drehpunkt (210) mit dem zweiten Arm (204) verbunden ist, der dritte Arm (206) über einen zweiten Drehpunkt (212) mit dem ersten Arm (202) verbunden ist, der vierte Arm (208) über einen dritten Drehpunkt (214) mit dem zweiten Arm (204) verbunden ist und der dritte Arm (206) über den vierten Drehpunkt (216) mit dem vierten Arm (208) verbunden ist, eine erste Membranhalterung (220), die an dem vierten Arm (208) befestigt ist, und eine zweite Membranhalterung (222), die an dem dritten Arm (206) befestigt ist, um es der ersten und zweiten Membranhalterung (220, 222) zu ermöglichen, die Membran (110) einzuspannen, wenn der zweite Arm (204) nach oben gezogen wird.

7. Filtrationssystem (100) nach Anspruch 6, wobei die Greifeinheit (118) eine Verriegelungsvorrichtung (224) und ein Verriegelungselement (226) umfasst, wobei das Verriegelungselement (226) über einen fünften Drehpunkt (218) mit dem zweiten Arm (206) drehverbunden ist, wobei die Verriegelungsvorrichtung (224) Folgendes umfasst ein Führungselement (230), das mit einer schrägen oberen Fläche (242) und einer Bodenflächenausnehmung (232) versehen ist,
ein Kippelement (234), das über einen Kippdrehpunkt (240) drehbar befestigt und mit einer schrägen oberen Fläche (244) und einer unteren Fläche (246) versehen ist, wobei das Verriegelungselement (226) ferner Folgendes umfasst
einen Verriegelungsstift (228), der in einem Umfangsende des Verriegelungselements (226) vorgesehen ist, so dass beim Absenken des zweiten Arms (206) der Verriegelungsstift (228) in die Verriegelungsvorrichtung (224) eingeführt und über die schräge obere Fläche (242) des Kippelements (234) und die schräge obere Fläche (244) des Führungselements (230) nach unten geführt wird, anschließend, wenn der zweite Arm (206) angehoben wird, der Verriegelungsstift (228) in der Bodenflächenausnehmung (232) des Führungselements (230) eingefangen wird, wodurch dafür gesorgt wird, dass die erste und der zweite Membranhalterung (220, 222) auseinandergehalten werden,
anschließend, wenn der zweite Arm (206) angehoben und abgesenkt wird, der Verriegelungsstift (228) aus der Bodenflächenausnehmung (232) gelöst und zwischen dem Führungselement (230) und dem Kippelement (234) hindurchgeschoben wird, indem das Kippelement (234) über die Bodenfläche (246) des Kippelements (234) aus einer Schließstellung (I) in eine Öffnungsstellung (II) und aus der Verriegelungsvorrichtung (224) herausgedrückt wird.

8. Filtrationssystem (100) nach einem der vorhergehenden Ansprüche, wobei der Stützrahmen (114) relativ zu der Membrananordnung (102) fest angebracht ist.

9. Filtrationssystem (100) nach einem der vorhergehenden Ansprüche, wobei der Stützrahmen (114) an den Membrangehäusen (104) fest angebracht ist.

10. Filtrationssystem (100) nach Anspruch 9, wobei der Stützrahmen (114) über eine erste und eine zweite Rohrschelle (126a, 126b) an den Membrangehäusen (104) angebracht ist.

11. Filtrationssystem (100) nach einem der vorhergehenden Ansprüche, das eine Stützvorrichtung (120) umfasst, die dazu angeordnet ist, mit einem der Membrangehäuse (104) an der Öffnung (106) des Membrangehäuses (104) verbunden zu werden, und dazu ausgelegt ist, Membranen (110) zu stützen, die in das Membrangehäuse (106) geschoben oder aus diesem herausgezogen werden.

12. Verfahren (300) zum Austauschen von Membranen (110) in einem Filtrationssystem (100) nach Anspruch 11, wobei sich die Membrangehäuse (104) in dem Filtrationssystem (100) in einer horizontalen Richtung (A) erstrecken, wobei das Verfahren Folgendes umfasst
a) Befestigen (302) der Stützvorrichtung (120) an einer Öffnung (106) eines der Membrangehäuse (104) des Filtrationssystems (100),
b) Ziehen (304) einer Membran (110) in horizontaler Richtung (A) aus dem Membrangehäuse (104) heraus und in die Stützvorrichtung (120),
c) Greifen und Anheben (306) der Membran (106) mit der Greifeinheit (118),
d) Bewegen (308) der Greifeinheit (118) mit der Membran (106) in der Richtung (B) entlang der gemeinsamen Ebene (109),
e) Absenken und Freigeben (310) der Membran (106) in einem Ablagebereich (136),
f) Wiederholen (312) der Schritte b) bis e), bis das Membrangehäuse (104) leer ist,
g) Greifen und Anheben (314) einer neuen Membran (134) mit der Greifeinheit (118) aus einem Aufnahmebereich (138),
h) Verschieben (316) der Greifeinheit (118) mit der neuen Membran (134) in Richtung (B) entlang der gemeinsamen Ebene (109),
i) Absenken und Freigeben (318) der neuen Membran (134) in der Stützvorrichtung (120),
j) Schieben (320) der neuen Membran in horizontaler Richtung (A) in das Membrangehäuse (104),
k) Wiederholen (322) der Schritte g) bis j), bis das Membrangehäuse (104) mit neuen Membranen (134) gefüllt ist,
l) Entfernen (324) der Stützvorrichtung (120) aus der Öffnung (106) des Membrangehäuses (104) und
m) Wiederholen (326) der Schritte a) bis 1) für mehrere Membrangehäuse (104) des Filtrationssystems (100).

## Revendications

1. Système de filtration (100) comprenant,
un agencement de membrane (102) comprenant des boîtiers à membrane (104) s'étendant dans une première direction (A) et présentant des ouvertures (106) qui sont situées dans un plan commun (109) et font face à une zone commune (108), et
des membranes (110) disposées à l'intérieur des boîtiers de membrane (104) et conçues pour être remplacées par le biais des ouvertures (106), et
un agencement de levage (112) comprenant un cadre de support (114) comportant une poutre (116) qui s'étend le long du plan commun (109) et est disposée verticalement au-dessus de la zone commune (108), et une unité de préhension (118) fixée coulissante à la poutre (116) et conçue pour saisir les membranes (110) et transporter les membranes (106) dans une direction (B) le long du plan commun (109),
les boîtiers à membrane (104) s'étendant dans une première direction (A) et la poutre (116) s'étendant dans une seconde direction (B) perpendiculaire, ou au moins sensiblement perpendiculaire, à la première direction (A), la première direction (A) étant une direction horizontale, **caractérisé en ce que**
l'unité de préhension (118) est fixée à la poutre (116) par l'intermédiaire d'une unité de levage (130), l'unité de levage (130) comprenant un moteur (131) conçu pour déplacer verticalement l'unité de préhension (118) en même temps qu'une membrane (110) maintenue par l'unité de préhension (118), et
l'unité de préhension (118) est complètement suspendue par l'unité de levage (130), l'unité de levage (130) étant disposée verticalement au-dessus de l'unité de préhension (118).

2. Système de filtration (100) selon la revendication 1, les boîtiers à membrane (104) étant disposés en rangées horizontales (124) et colonnes verticales (122).

3. Système de filtration (100) selon l'une quelconque des revendications précédentes, les membranes (110) étant des membranes enroulées en spirale qui sont disposées en groupes dans les boîtiers à membrane (104), les membranes (110) dans chaque groupe étant positionnées les unes après les autres dans la première direction (A).

4. Système de filtration (100) selon l'une quelconque des revendications précédentes, la poutre (116) étant pourvue d'une rainure (128) à laquelle l'unité de préhension (118) est reliée, pour permettre à l'unité de préhension de coulisser le long de la poutre (116) dans la direction (B) le long du plan commun (109).

5. Système de filtration (100) selon l'une quelconque des revendications précédentes, l'unité de préhension (118) comprenant une pince à tubes 219 destinée à saisir une membrane (110).

6. Système de filtration (100) selon l'une quelconque des revendications précédentes, l'unité de préhension (118) comprenant
un premier bras (202), un deuxième bras (204), un troisième bras (206) et un quatrième bras (208), le premier bras (202) étant relié au deuxième bras (204) par l'intermédiaire d'un premier point de rotation (210), le troisième bras (206) étant relié au premier bras (202) par l'intermédiaire d'un deuxième point de rotation (212), le quatrième bras (208) étant relié au deuxième bras (204) par l'intermédiaire d'un troisième point de rotation (214), et le troisième bras (206) étant relié au quatrième bras (208) par l'intermédiaire du quatrième point de rotation (216),
un premier porte-membrane (220) fixé au quatrième bras (208), et un second porte-membrane (222) fixé au troisième bras (206), pour permettre au premier et au second porte-membrane (220, 222) de serrer la membrane (110) lorsque le deuxième bras (204) est tiré vers le haut.

7. Système de filtration (100) selon la revendication 6, l'unité de préhension (118) comprenant un dispositif de verrouillage (224) et un élément de verrouillage (226), l'élément de verrouillage (226) étant relié en rotation au deuxième bras (206) par l'intermédiaire d'un cinquième point de rotation (218), ledit dispositif de verrouillage (224) comprenant
un élément de guidage (230) comprenant une surface supérieure inclinée (242) et d'un évidement de surface inférieure (232),
un élément d'inclinaison (234) fixé en rotation par l'intermédiaire d'un point de rotation d'inclinaison (240) et comprenant une surface supérieure inclinée (244) et d'une surface inférieure (246),
ledit élément de verrouillage (226) comprenant en outre une goupille de verrouillage (228) située dans une extrémité périphérique de l'élément de verrouillage (226), de sorte que
lorsque le deuxième bras (206) est abaissé, la goupille de verrouillage (228) soit introduite dans le dispositif de verrouillage (224) et guidée vers le bas par l'intermédiaire de la surface supérieure inclinée (242) de l'élément d'inclinaison (234) et de la surface supérieure inclinée (244) de l'élément de guidage (230), ensuite, lorsque le deuxième bras (206) est levé, la goupille de verrouillage (228) soit attrapée dans l'évidement de surface inférieure (232) de l'élément de guidage (230), ce qui permet de maintenir écartés le premier et le second porte-membrane (220, 222), ensuite, lorsque le deuxième bras (206) est abaissé et levé, la goupille de verrouillage (228) est libérée de l'évidement de surface inférieure (232) et poussée entre l'élément de guidage (230) et l'élément d'inclinaison (234) en poussant l'élément d'inclinaison (234) d'une position fermée (I) vers une position ouverte (II) par l'intermédiaire de la surface inférieure (246) de l'élément d'inclinaison (234) et hors du dispositif de verrouillage (224).

8. Système de filtration (100) selon l'une quelconque des revendications précédentes, le cadre de support (114) étant fixé à demeure par rapport à l'agencement de membrane (102).

9. Système de filtration (100) selon l'une quelconque des revendications précédentes, le cadre de support (114) étant fixé à demeure aux boîtiers à membrane (104).

10. Système de filtration (100) selon la revendication 9, le cadre de support (114) étant fixé aux boîtiers à membrane (104) par l'intermédiaire d'un premier et d'un second collier de serrage de tuyau (126a, 126b).

11. Système de filtration (100) selon l'une quelconque des revendications précédentes, comprenant un dispositif de support (120) conçu pour être relié à l'un des boîtiers à membrane (104) au niveau de l'ouverture (106) du boîtier à membrane (104), et conçu pour supporter les membranes (110) qui sont poussées dans ou tirées hors du boîtier à membrane (106).

12. Procédé (300) destiné à remplacer des membranes (110) dans un système de filtration (100) selon la revendication 11, les boîtiers à membrane (104) dans le système de filtration (100) s'étendant dans une direction horizontale (A), ledit procédé comprenant les étapes consistant à
a) fixer (302) le dispositif de support (120) sur une ouverture (106) de l'un des boîtiers à membrane (104) du système de filtration (100),
b) tirer (304), dans la direction horizontale (A), une membrane (110) hors du boîtier à membrane (104) et dans le dispositif de support (120),
c) saisir et lever (306) la membrane (106) avec l'unité de préhension (118),
d) déplacer (308) l'unité de préhension (118) avec la membrane (106) dans la direction (B) le long du plan commun (109),
e) abaisser et relâcher (310) la membrane (106) dans une zone d'abandon (136),
f) répéter (312) les étapes b) à e) jusqu'à ce que le boîtier à membrane (104) soit vide,
g) saisir et lever (314), depuis une zone de prélèvement (138), d'une nouvelle membrane (134) avec l'unité de préhension (118),
h) faire coulisser (316) l'unité de préhension (118) avec la nouvelle membrane (134) dans la direction (B) le long du plan commun (109),
i) abaisser et relâcher (318) la nouvelle membrane (134) dans le dispositif de support (120),
j) pousser (320), dans la direction horizontale (A), la nouvelle membrane dans le boîtier à membrane (104),
k) répéter (322) les étapes g) à j) jusqu'à ce que le boîtier à membrane (104) soit rempli avec des nouvelles membranes (134),
l) retirer (324) le dispositif de support (120) de l'ouverture (106) du boîtier à membrane (104), et
m) répéter (326) les étapes a) à 1) pour un certain nombre de boîtiers à membrane (104) du système de filtration (100).
